# EUROPEAN PATENT SPECIFICATION

(11) **EP 2 258 077 B1**
(45) Date of publication and mention of the grant of the patent: **06.11.2013**
(21) Application number: 09722070.1
(22) Date of filing: 18.03.2009
(51) Int. Cl.: H04L 12/70

(54) **ADJUSTING CONGESTION NOTIFICATION CONTROL LOOP PARAMETERS**
EINSTELLUNG VON STEUERKREISPARAMETERN FÜR ÜBERLASTUNGSMELDUNG
AJUSTEMENT DE PARAMÈTRES DE BOUCLE DE COMMANDE DE NOTIFICATION DE CONGESTION

(30) Priority: 20.03.2008 US 52203
(43) Date of publication of application: 08.12.2010
(73) Proprietor: Cisco Technology, Inc., San Jose, CA 95134 (US)
(72) Inventor: RIVERS, James Paul, Saratoga CA 95070 (US); PRABHAKAR, Balaji, Palo Alto, CA 94301 (US)
(74) Representative: Kazi, Ilya
(86) International application number: PCT/US2009/037551
(87) International publication number: WO 2009/117508

(56) References cited:
- EP-A2- 1 441 288
- US-A1- 2001 012 270
- US-A1- 2003 099 197
- US-A1- 2007 081 454
- US-B1- 6 625 118
- US-B2- 7 058 723
- JIANG J ET AL: "Analysis of Backward Congestion Notification (BCN) for Ethernet In Datacenter Applications", INFOCOM 2007. 26TH IEEE INTERNATIONAL CONFERENCE ON COMPUTER COMMUNICA TIONS. IEEE, IEEE, PI, 1 May 2007 (2007-05-01), pages 2456-2460, XP031093836, DOI: 10.1109/INFCOM.2007.300 ISBN: 978-1-4244-1047-7

## Description

### FIELD

This application relates to method and system to adjust Congestion Notification (CN) control loop parameters at a congestion point.

### BACKGROUND

Congestion is the networking term that refers to a situation where too much network traffic is clogging network pathways. Common causes of congestion may include too many users on a single network segment or collision domain, high demand from bandwidth-intensive networked applications, a rapidly growing number of users accessing the Internet, the increased power of personal computers (PCs) and servers, etc.

Some common indicators of network congestion include increased network delay. All networks have a limited data-carrying capacity. When the load is light, the average time from when a host submits a packet for transmission until it is actually sent on the network is relatively short. When many users are vying for connections and communicating, the average delay increases. This delay has the effect of making the network appear "slower," because it takes longer to send the same amount of data under congested conditions than it does when the load is light.

In extreme circumstances, an application can fail completely under a heavy network load. Sessions may timeout and disconnect, and applications or operating systems may actually crash, requiring a system restart.

A paper by Jinjing Jang and Raj Jain from INFOCOM 2007 26 IEEE International Conference on Computer Communications 1 May 2007 pages 2456-2460 entitled "Analysis of Backward Congestion Notification (BCN) for Ethernet In Datacenter Applications" describes a rate-based closed loop feedback control mechanism in which, at the core switch where congestion happens, a core detector is integrated in the hardware to generate a feedback message. The core switch monitors the length of its output queue and decides whether there is congestion. If congestion is detected, the switch signals the sources with a BCN message that contains information required for the source to adjust their rates.

US 2007/0081454 describes methods and devices for backward congestion notification in which rate limiters shape individual flows of reaction points that are causing congestion. The parameters of these rate limiters are tuned based on feedback from congestion points in the form of backward congestion notification, BCN, messages. In some implementations the BCN messages include congestion change information and at least one instantaneous measure of congestion. The instantaneous measure of congestion may be relative to the threshold of a particular queue and/or relative to a threshold of a buffer that includes a plurality of queues.
The present invention is set out in the appended claims.

### BRIEF DESCRIPTION OF DRAWINGS

Embodiments of the present invention are illustrated by way of example and not limitation in the figures of the accompanying drawings, in which like references indicate similar elements and in which:

**Figure 1** is a diagrammatic representation of a network environment within which an example embodiment may be implemented;

**Figure 2** is a diagrammatic representation of a system to adjust CN control loop parameters at a congestion point, in accordance with an example embodiment;

**Figure 3** is a congestion point queue environment, in accordance with an example embodiment; and

**Figure 4** is a flow chart of a method to adjust CN control loop parameters at a congestion point, in accordance with an example embodiment;

**Figure 5** is a CN frame, in accordance with an example embodiment; and

**Figure 6** illustrates a diagrammatic representation of an example machine in the form of a computer system within which a set of instructions, for causing the machine to perform any one or more of the methodologies discussed herein, may be executed.

### DETAILED DESCRIPTION

In networking, a network flow from a traffic source directed to a traffic destination (sometimes referred to as a traffic sink) may go through one or more interconnect devices, such as, for example, network switches and network routers. An interconnect device that is responsible for forwarding network flow from the source of traffic to the traffic sink may maintain a queue to facilitate storing and processing of the incoming traffic. An interconnect device may be unable to process the incoming messages (or frames) at the rate the messages are arriving, which may result in the queue getting filled up. In order to address this issue, the interconnect may be configured to detect that the queue is filled beyond a predetermined threshold and to notify the source of the traffic that it is necessary for the source of the traffic to slow down the rate at which the source outputs network messages. The state of the queue, where the queue is filled beyond a predetermined threshold, may be referred to as a state of congestion. The interconnect thus may be referred to as a congestion point (CP), and the queue to facilitate the storing and processing of the incoming messages may be referred to as a congestion point queue.

One example congestion management mechanism is a so-called Congestion Notification (CN). CN, in one example embodiment, relies on detecting congestion condition by monitoring the state of the congestion point queue and sending a feedback message back to the source of traffic in response to the determined state of the congestion point queue. The flow of notification messages (or CN messages) from the congestion point to reaction point in response to the traffic flow from the reaction point to the congestion point may be referred to as a Congestion Notification loop (CN loop). A network within which CN mechanism has been implemented may be referred to as a CN-enabled network.

An example feedback message may include various information related to the state of the associated congestion queue. The source of the traffic receives the feedback message, and takes appropriate measures based on the queue state information provided with the feedback message. CN, thus, may permit shifting network congestion from the core of the network towards the edge of the network, where there is less traffic aggregation and where more resources may be available to address congestion more effectively.

A device at which congestion mitigation measures may be put in place, e.g., the source of the traffic or another interconnect device, may be referred to as a reaction point (RP). Network frames entering a CN-enabled network may be tagged by the reaction point with a congestion management tag (CM-Tag). A CM-Tag identifies, e.g., with a FlowID value, those traffic flows to which congestion mitigation measures (or rate control measures) should be applied. Congestion mitigation measures may include, for example, lowering the rate at which network frames are transmitted from the reaction point. The reaction point may be configured to analyze the responsiveness of the network and determine the adjustment parameters to alter the rate of the output network flow based on the queue state information provided from the congestion point via a feedback message and the determined responsiveness of the network. For example, if the feedback message indicates that the congestion point queue is oversubscribed and the responsiveness of the network is high, the rate of the flow may be decreased less dramatically than if the if the responsiveness of the network is low. The nature of the rate adjustment performed at the reaction point may be long term (semi-static), short-term (e.g., associated with a single congestion event), or even time-of-day (based on heuristics).

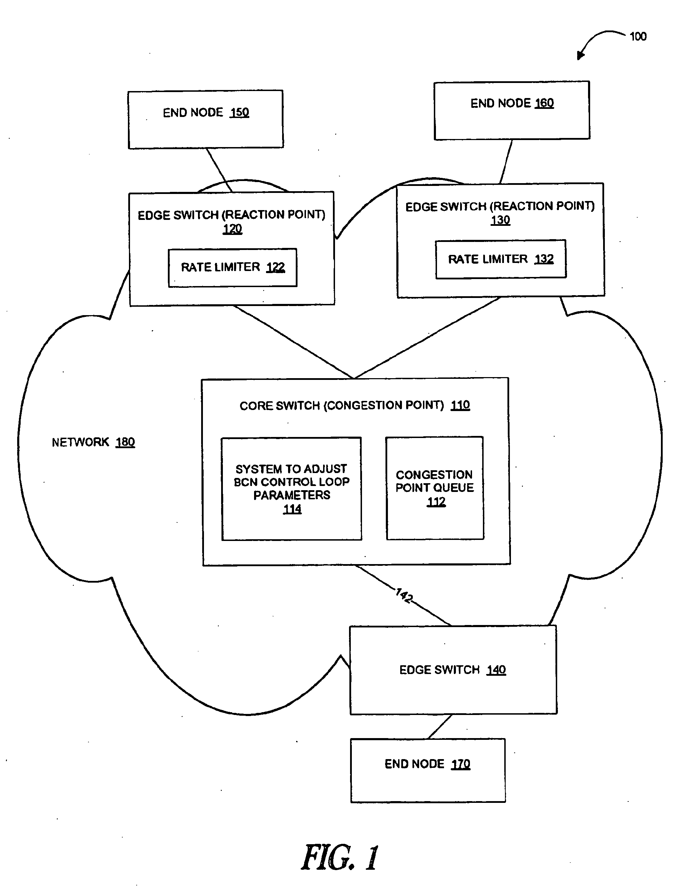

In one example embodiment, the congestion point may include a CN control loop adjustment system to provide the reaction point with feedback messages generated based on observations with respect to the responsiveness of the network made at the congestion point. An example CN control loop adjustment system may be configured to measure the responsiveness of the CN loop by monitoring how the CN messages that are being sent from the congestion point to the reaction point affect both the reduction and the increase of the network flow load. The responsiveness of the CN loop may be determined, in one example embodiment, by monitoring the depth of the congestion point queue over time. CN messages may be then generated to include control parameters that are based on the responsiveness of the CN loop. The congestion point may utilize the determined responsiveness of the CN loop to alter the parameters in the CN message that are related to the state of the congestion point queue. The parameters in the CN message that are related to the state of the congestion point queue, may include values associated with the relationship between the current depth of the queue and the depth of the queue that determines congestion, the severity of congestion indicator, etc. An example embodiment of a network environment where a system to adjust a CN control loop resides at a congestion point may be described with reference to Figure 1.

Figure 1 illustrates a network environment 100. The environment 100, in an example embodiment, includes a core switch 110, a number of edge switches 120, 130, and 140, and end nodes 150, 160 and 170. The core switch 110, the edge switches 120, 130, and 140, and the end nodes 150, 160 and 170 are shown in Figure 1 as coupled to a communications network 180. The communications network 180 may be a public network (e.g., the Internet, a wireless network, etc.) or a private network (e.g., LAN, WAN, Intranet, etc.).

The end nodes 150 and 160 may simultaneously send network traffic at a line rate of, e.g., 10 Gbps, to the end node 170. The aggregate rate of traffic originating from the end nodes 150 and 160 may exceed the capacity of the link 142 connecting the core switch 110 to the edge switch 140. Specifically, the depth of a congestion point queue 112, which is associated with the core switch 110 and the link 142, may increase significantly above the target level around which the queue length should oscillate under normal congestion conditions.

The core switch 110 may be configured to support CN or some other congestion management technique. A system to adjust the CN control loop parameters 114 may reside at the core switch 110 and be configured to monitor the depth of the congestion point queue 112. The system to adjust the CN control loop parameters 114 may utilize the depth of the congestion point queue 112 over time in order to determine the responsiveness of the CN control loop. When a congestion condition is detected, the system to adjust the CN control loop parameters 114 may generate and send an appropriate feedback message towards the end nodes 150 and 160.

The feedback messages may be processed at the edge switches 120 and 130 that are shown to include respective rate limiters 122 and 132. It will be noted that, in some embodiments, feedback messages may be processed at end nodes 150 and 160, provided the end nodes 150 and 160 support CN. The processing of a feedback message at a reaction point may result in the instantiation of a rate limiter, unless a rate limiter has already been installed. In one example embodiment, a rate limiter may be configured to slow down a congesting traffic flow in order to mitigate congestion at the congestion point (e.g., at the core switch 110). In some example embodiments, if congestion improves or dissipate completely, feedback messages may be generated at the congestion point to cause the rate limiters to increase the rate of traffic flow in order to avoid under-utilizing the bandwidth at the congestion point.

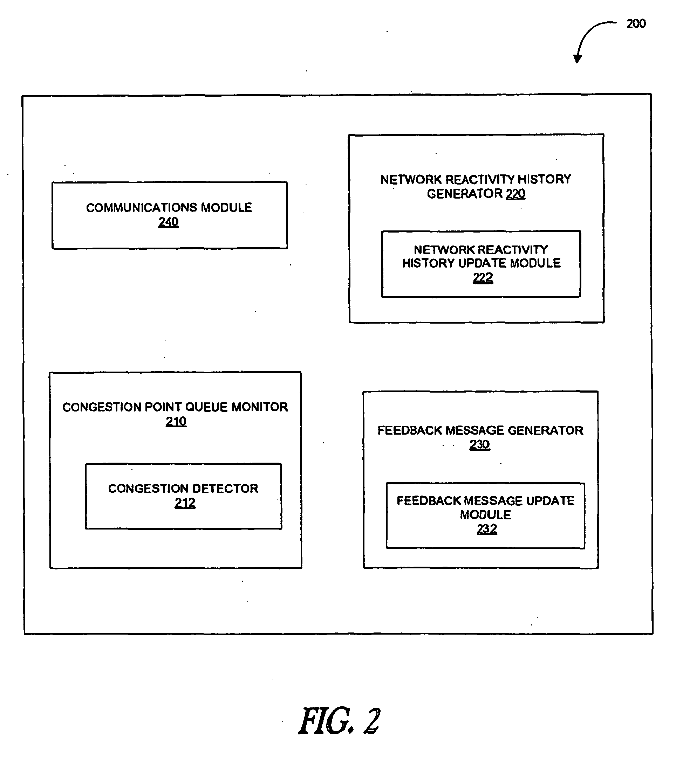

It will be noted, that a system to manage a network traffic congestion adjust CN control loop may be provided at any congestion point, e.g., at the edge switch 140, at the end node 170, etc. Example components of a system to manage network traffic congestion configured to adjust a CN control loop parameters at a congestion point may be described with reference to Figure 2.

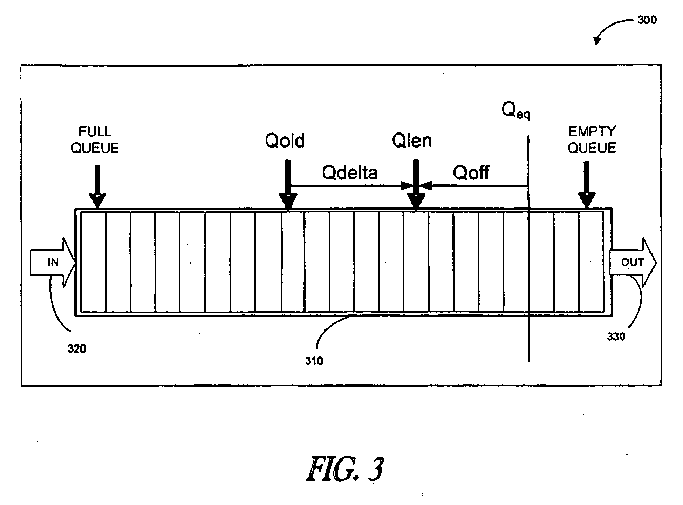

Referring to Figure 2, a system to manage network traffic congestion 200, in one example embodiment, includes a congestion point queue monitor 210, a network reactivity history generator 220, a feedback message generator 230, and a communications module 240. The congestion point queue monitor 210 may be configured to monitor the state of a congestion point queue (e.g., the congestion point queue 112 shown in Figure 1) that receives incoming network frames. An example congestion point queue environment 300 is illustrated in Figure 3.

As shown in Figure 3, an equilibrium threshold Qeq defines the operating point of a queue 310 under congestion conditions. In one example embodiment, Qeq is the target level around which the queue length should oscillate under normal congestion conditions.

As shown in Figure 3, incoming frames 320 are sampled with a certain probability P, e.g., 0.01. In one example embodiment, the sampling is being performed on a byte arrival basis. Thus, if an average frame length is E[L], then a frame is sampled on average every E[L]/P byte received. If, for example, an average frame has the length of 1000 bytes, then the average sampling rate would be one frame every 100 KB of data received. Sampling may be performed by, in one example embodiment, utilizing a fixed interval Sf followed by a random interval Sr. Initially, and after every sample, the sampling interval S may be calculated by adding the fixed interval Sf and the random interval Sr.

The length of every frame that arrives at the queue 310 is accumulated in a length (L) variable. An incoming frame is sampled as soon as the value of L is determined to be greater than the sampling interval S. A new random interval Sr is then selected and the value of L is set to zero. The fixed interval Sf may be configurable in the range [0, 256] KB with 1 byte increments. The random interval Sr may be generated in the range [0, 64] KB with 1 byte increments. In some embodiments, mechanisms may be deployed that indicate that some frames should not be subject to congestion management.

The two components of the CN feedback message, Qoff and Qdelta, may be computed. As shown in Figure 3, Qoff is the offset of the current queue length Qlen with respect to the equilibrium threshold Qeq. Qoff is considered to be saturated at +Qeq and -Qeq. Qdelta is the change in length of the queue since the last sampled frame.

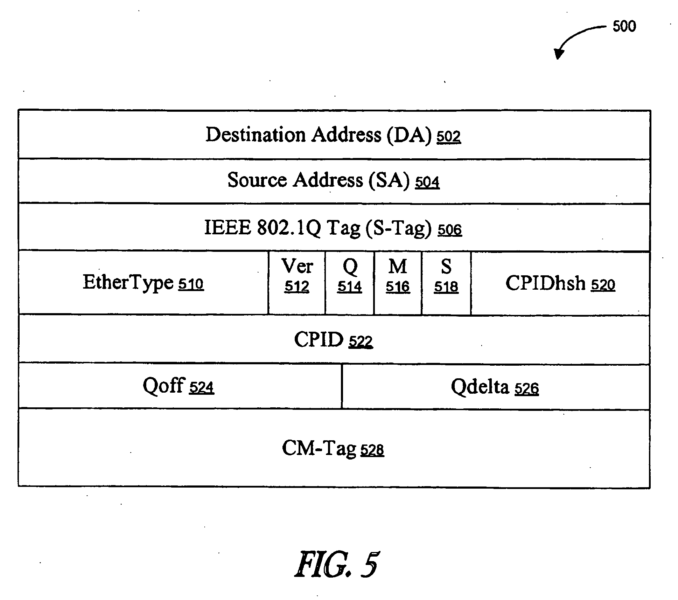

The value of Qoff being positive indicates that the queue 310 is above the equilibrium threshold. In certain networks, Qeq may be set differently for different congestion points. In order to generate CN messages carrying a normalized feedback, a scaling factor Qscale may be used to multiply the values of Qoff and Qdelta copied into a CN frame. For example, Qoff and Qdelta may be calculated and the actual CN frame may include Qscale.Qoff and Qscale.Qdelta values. For example, a congestion point with a relatively small queue may have a lower Qeq, which, in turn, results in a relatively smaller range for the Qoff and Qdelta values being generated by such congestion point. In one example embodiment, when Qoff and Qdelta are both zero, no CN message is being generated. A CN frame generated by a congestion point may carry in the payload the CM-Tag copied from the sampled frame, as described below, with reference to Figure 5. This information may be used by the reaction point to determine appropriate congestion mitigation measures.

Returning to Figure 2, the congestion point queue monitor 210 may further include a congestion detector 212 to detect congestion, e.g., based on the state of the congestion point queue. The network reactivity history generator 220 may be configured to generate reaction to congestion history based on sampled incoming frames. With each new sample, the reaction to congestion history may be updated by a network reactivity history update module 222. The feedback message generator 230 may be configured to generate a feedback message to provide information associated with the state of the congestion point queue to the reaction point. The feedback message generator 230, in one example embodiment, utilizes reaction to congestion history to determine how the congestion point queue should be advertised to the reaction point. The communications module 240 may be configured to receive network frames and to send feedback messages to the reaction point.

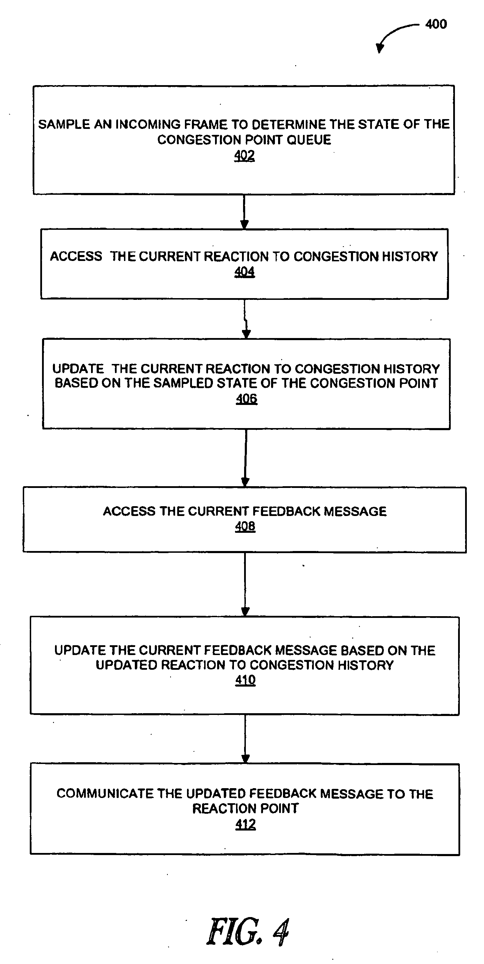

Each time the congestion point queue monitor 210 samples a frame to determine the current state of the congestion point queue, the network reactivity history generator 220 generates an updated reaction to congestion history by consolidating the current state of the congestion point queue with the current reaction to congestion history. The feedback message generator 230 then generates a feedback message. If a feedback message already exists, the feedback message generator 230 utilizes a feedback message update module 232 to update the current feedback message, based on the updated reaction to congestion history. Example operations performed by the congestion management system 200 may be described with reference to Figure 4.

Figure 4 is a flow chart of a method 400 to adjust a CN control loop parameters at a congestion point, in accordance with an example embodiment. The method 400 may be performed by processing logic that may comprise hardware (e.g., dedicated logic, programmable logic, microcode, etc.), software (such as run on a general purpose computer system or a dedicated machine), or a combination of both. In one example embodiment, the method 400 may be performed by the various modules discussed above with reference to Figure 2. Each of these modules may comprise processing logic.

As shown in Figure 4, at operation 402, the congestion point queue monitor 210 samples a frame to determine the current state of the congestion point queue. The network reactivity history generator 220 accesses the current network reactivity history at operation 404 and updates the network reactivity history by consolidating the current state of the congestion point queue with the current reaction to congestion history at operation 406. At operation 408, the feedback message generator 230 accesses the current feedback message and updates the current feedback message at operation 410 based on the updated reaction to congestion history. The communications module 240 sends the updated feedback message to the reaction point at operation 312.

As mentioned above, the exchange of messages between a device where congestion is detected (congestion point) and a device where congestion mitigation measures are put in place (reaction point) may be performed utilizing a CM-Tag. The frames entering a CN-enabled network may be tagged by the reaction point with a CM-Tag. A CM-Tag, in one example embodiment, identifies traffic flows that are subject to rate control. Thus, if a congestion point receives a frame without a CM-Tag, an exception flag may be raised , which may cause the frame to be dropped. A CM-Tag may also denote a particular traffic flow that cannot be rate-limited (e.g., network control traffic).

When congestion is detected at a congestion point, a congestion management system starts generating and sending feedback messages to the reaction point(s) associated with the traffic flows that are believed to have caused congestion. The feedback message, in one example embodiment, is an Ethernet frame known as the CN Frame. An example format of a CN frame 500 may be described with reference to Figure 5.

A feedback message represented by the CN frame 500 may be generated by a congestion point in response to sampling incoming network traffic, as described above, e.g., with reference to Figure 4. In one example embodiment, the CN Frame 500 includes a Destination Address (DA) that may be equal to the Source Address of the sampled frame. A Destination Address may be stored in a DA field 502. A Source Address (SA), which is equal to a Media Access Control (MAC) address associated with the congestion point, is stored in field 504. Thus, the CN Frame may be forwarded back to the source of the traffic causing congestion with a valid source address.

Field 506 includes the IEEE 802.1Q Tag or S-Tag, which may be copied from the sampled frame. Field 506 of the CN Frame (802.1Q Tag or S-Tag, sometimes referred to as a priority field of the CN Frame) is set, in one embodiment, either to the priority of the sampled frame or to a configurable priority value. The S-Tag in the field 506 may be set to the highest priority in order to minimize the latency experienced by CN Frames.

Field 510 is shown in Figure 5 to include the Ethertype of the CN Frame. The Ethertype value may be set to an interim value of 0xBC4E, identifying the frame as being a CN feedback message. The CN Ethertype, in one example embodiment, is distinct from the CM-Tag Ethertype.

The Version field 512 indicates the version of the CN protocol. An M field 516, in one example embodiment, indicates a condition of mild buffer congestion, while an S field 518 indicates a condition of severe buffer congestion.

A CPIDhsh field 520 is used to carry a hash value associated with a Congestion Point Identifier (CPID) field 522 that follows. The CPIDhsh field 520 may be utilized to minimize the amount of false positive feedback messages generated by multiple congestion points along the path from a source device to a destination device. The CPID field 522 may be utilized to univocally identify a congested entity (e.g., a congestion point queue) within a contiguous set of devices that support CN. A contiguous set of devices that support CN is sometimes referred to as a Congestion Management Domain. CPID information may be propagated to the reaction point in order to create a bi-univocal association between the congestion point and one or more reaction points. Because the CPID is an opaque object, the format of the CPID may be only relevant to the congestion point that assigns it. In order to ensure global uniqueness, the CPID may include the MAC address of the switch with which the congestion point is associated. The CPID may also include a local identifier to ensure local uniqueness.

A Qoff field 524 and Qdelta field 526 may include the actual feedback information conveyed by the congestion point to the reaction point. As described above, with reference to Figure 3, the value of Qoff is the offset of the current length of the queue 310 with respect to the equilibrium threshold Qeq. The value of Qdelta is the change in length of the queue 310 since the last sampled frame. The payload of a CN Frame (field 528) comprises the CM-Tag, including its Ethertype, copied from the sampled frame. The payload 528 may convey information that may be utilized at the reaction point to determine an appropriate congestion mitigation action.

When a reaction point receives a feedback message (e.g., a CN frame) from a congestion point, and the feedback message causes a congestion mitigation action to be performed on a particular traffic flow (e.g., the activation of a rate limiter or an adjustment of one or more parameters of the rate limiter), the CPID field 522 and the CPIDhsh field 520 from the CN Frame may be stored in local registers associated with the corresponding rate limiter. The network flow frames that may be subsequently injected by the reaction point in the network will carry a CM-Tag with a Rate Limited Tag (RLT) Option containing the CPIDhsh from the local register at the reaction point. The CN frame 500 may also include other fields, not shown in Figure 5.

It will be noted, that while the embodiments of the inventive techniques have been described with reference to CN, the techniques to adjust control loop parameters at the congestion point may be utilized with congestion management systems other than CN, such as Transmission Control Protocol (TCP) and Frame Relay protocol.

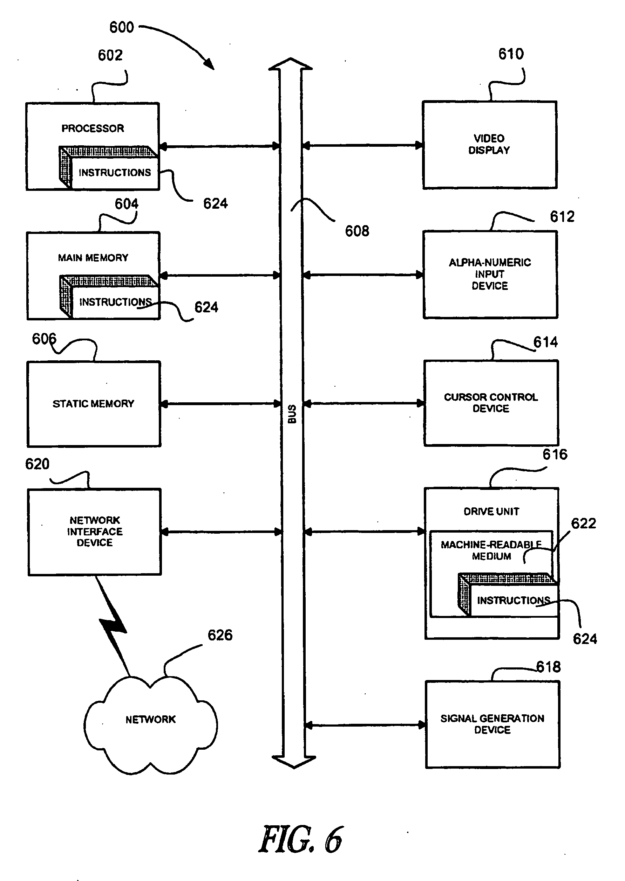

Figure 6 shows a diagrammatic representation of machine in the example form of a computer system 600 within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a voice mail system, a cellular telephone, a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU), a graphics processing unit (GPU) or both), a main memory 604 and a static memory 606, which communicate with each other via a bus 608. The computer system 600 may further include a video display unit 610 (e.g., a liquid crystal display (LCD) or a cathode ray tube (CRT)). The computer system 600 also includes an alphanumeric input device 612 (e.g., a keyboard), optionally a user interface (UI) navigation device 614 (e.g., a mouse), optionally a disk drive unit 616, a signal generation device 618 (e.g., a speaker) and a network interface device 620.

The disk drive unit 616 includes a machine-readable medium 622 on which is stored one or more sets of instructions and data structures (e.g., software 624) embodying or utilized by any one or more of the methodologies or functions described herein. The software 624 may also reside, completely or at least partially, within the main memory 604 and/or within the processor 602 during execution thereof by the computer system 600, the main memory 604 and the processor 602 also constituting machine-readable media.

The software 624 may further be transmitted or received over a network 626 via the network interface device 620 utilizing any one of a number of well-known transfer protocols, e.g., a Hyper Text Transfer Protocol (HTTP).

While the machine-readable medium 622 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention, or that is capable of storing, encoding or carrying data structures utilized by or associated with such a set of instructions. The term "machine-readable medium" shall accordingly be taken to include, but not be limited to, solid-state memories, optical and magnetic media, and carrier wave signals. Such medium may also include, without limitation, hard disks, floppy disks, flash memory cards, digital video disks, random access memory (RAM), read only memory (ROMs), and the like.

The embodiments described herein may be implemented in an operating environment comprising software installed on any programmable device, in hardware, or in a combination of software and hardware.

Thus, a method and system to adjust Congestion Notification control loop parameters at a congestion point have been described. Although embodiments have been described with reference to specific example embodiments, it will be evident that various modifications and changes may be made to these embodiments without departing from the broader scope of the invention as set out in the claims. Accordingly, the specification and drawings are to be regarded in an illustrative rather than a restrictive sense.

## Claims

1. A method to manage network traffic congestion utilizing a congestion notification, CN, loop comprising feedback messages, the method comprising:
sampling a state of a congestion point the congestion point being to receive messages from a reaction point;
generating an updated reaction to congestion history by consolidating the state of the congestion point with a current reaction to congestion history, the current reaction to congestion history being associated with a current feedback message and reflecting responsiveness of the CN loop to the feedback message;
generating an updated feedback message based on the updated reaction to congestion history;
replacing the current feedback message with the updated feedback message; and
communicating the updated feedback message to the reaction point.

2. The method of claim 1, wherein the sampling of the state of the congestion point comprises sampling a state of a congestion point queue, the congestion point queue being to queue messages from the reaction point.

3. The method of claim 2, wherein the current reaction to congestion history comprises a value associated with a depth of the congestion point queue over time.

4. The method of claim 1, wherein the updated feedback message is to be used at the reaction point to determine adjustment of a rate of a traffic flow from the reaction point to the congestion point.

5. The method of claim 1, wherein the updated feedback message comprises an indicator of mild congestion.

6. The method of claim 5, wherein the updated feedback message comprises an indicator of severe congestion.

7. The method of claim 1, wherein the generating of the updated feedback message comprises calculating an adjusted rate of a traffic flow from the reaction point to the congestion point.

8. The method of claim 7, wherein the feedback message comprises the adjusted rate of the traffic flow from the reaction point to the congestion point queue.

9. The method of claim 1, wherein the congestion point is associated with a network switch.

10. The method of claim 1, wherein the congestion point is associated with a network adaptor.

11. A system to manage network traffic congestion utilizing a congestion notification, CN, loop comprising feedback messages, the system comprising:
a monitor (210) to sample a state of a congestion point, that is arranged to receive messages from a reaction point;
a history generator (220)to generate an updated reaction to congestion history by consolidating the state of the congestion point with a current reaction to congestion history, the current reaction to congestion history being associated with a current feedback message and reflecting responsiveness of the CN loop to the feedback message;
a message generator (230) to generate an updated feedback message based on the updated reaction to congestion history;
a message update module (232) to replace the current feedback message with the updated feedback message; and
a communications module (240) to communicate the updated feedback message to the reaction point.

12. The system of claim 11, wherein the monitor (210) is a queue monitor to sample the state of the congestion point by sampling a state of a congestion point queue of messages from the reaction point.

13. The system of claim 12, wherein the current reaction to congestion history comprises a value associated with a depth of the congestion point queue over time.

14. The system of claim 11, further comprising means for performing a method according to any of claims 4 to 10.

15. A machine-readable medium having stored thereon data representing sets of instructions which, when executed by a machine, cause the machine to perform a method according to any of claims 1 to 10.

## Patentansprüche

1. Verfahren zur Bewältigung von Netzdatenverkehrsüberlastungen, das eine Überlastungsmeldungsschleife (Congestion Notification - CN-Schleife) verwendet, die Rückmeldungen umfasst, wobei das Verfahren Folgendes umfasst:
Abfragen eines Zustands eines Überlastungspunktes, wobei der Überlastungspunkt Nachrichten von einem Reaktionspunkt empfängt;
Erzeugen eines aktualisierten Überlastungsreaktionsprotokolls durch Konsolidierung des Zustands des Überlastungspunkts mit einem aktuellen Überlastungsreaktionsprotokoll, wobei das aktuelle Überlastungsreaktionsprotokoll einer aktuellen Rückmeldung zugeordnet ist und die Reaktionsfähigkeit der CN-Schleife auf die Rückmeldung reflektiert;
Erzeugen einer aktualisierten Rückmeldung basierend auf dem aktualisierten Überlastungsreaktionsprotokoll;
Ersetzen der aktuellen Rückmeldung durch die aktualisierte Rückmeldung und
Kommunizieren der aktualisierten Rückmeldung zum Reaktionspunkt.

2. Verfahren nach Anspruch 1, wobei das Abfragen des Zustands des Überlastungspunkts das Abfragen eines Zustands einer Warteschlange des Überlastungspunkts umfasst, wobei die Warteschlange des Überlastungspunkts Nachrichten von dem Reaktionspunkt in einer Warteschlange anordnet.

3. Verfahren nach Anspruch 2, wobei das aktuelle Überlastungsreaktionsprotokoll einen Wert umfasst, der einer Tiefe der Warteschlange des Überlastungspunkts im Verlauf der Zeit zugeordnet ist.

4. Verfahren nach Anspruch 1, wobei die aktualisierte Rückmeldung bei dem Reaktionspunkt verwendet wird, um eine Anpassung einer Geschwindigkeit eines Datenverkehrsflusses von dem Reaktionspunkt zum Überlastungspunkt zu ermitteln.

5. Verfahren nach Anspruch 1, wobei die aktualisierte Rückmeldung einen Indikator einer mäßigen Überlastung umfasst.

6. Verfahren nach Anspruch 5, wobei die aktualisierte Rückmeldung einen Indikator einer schwerwiegenden Überlastung umfasst.

7. Verfahren nach Anspruch 1, wobei das Erzeugen der aktualisierten Rückmeldung die Berechnung einer angepassten Geschwindigkeit eines Datenverkehrsflusses von dem Reaktionspunkt zu dem Überlastungspunkt umfasst.

8. Verfahren nach Anspruch 7, wobei die Rückmeldung die angepasste Geschwindigkeit des Datenverkehrsflusses von dem Reaktionspunkt zu der Warteschlange des Überlastungspunkts umfasst.

9. Verfahren nach Anspruch 1, wobei der Überlastungspunkt einem Netzwerk-Switch zugeordnet ist.

10. Verfahren nach Anspruch 1, wobei der Überlastungspunkt einem Netzwerkadapter zugeordnet ist.

11. System zur Bewältigung von Netzdatenverkehrsüberlastungen, das eine Überlastungsmeldungsschleife (Congestion Notification - CN-Schleife) verwendet, die Rückmeldungen umfasst, wobei das System Folgendes umfasst:
einen Monitor (210) zum Abfragen eines Zustands eines Überlastungspunkts, der so angeordnet ist, dass er Nachrichten von einem Reaktionspunkt empfängt;
einen Protokollgenerator (220) zum Erzeugen eines aktualisierten Überlastungsreaktionsprotokolls durch Konsolidierung des Zustands des Überlastungspunkts mit einem aktuellen Überlastungsreaktionsprotokoll, wobei das aktuelle Überlastungsreaktionsprotokoll einer aktuellen Rückmeldung zugeordnet ist und die Reaktionsfähigkeit der CN-Schleife auf die Rückmeldung reflektiert;
einen Nachrichtengenerator (230) zum Erzeugen einer aktualisierten Rückmeldung basierend auf dem aktualisierten Überlastungsreaktionsprotokoll;
ein Nachrichtenaktualisierungsmodul (232) zum Ersetzen der aktuellen Rückmeldung durch die aktualisierte Rückmeldung und
ein Kommunikationsmodul (240) zum Kommunizieren der aktualisierten Rückmeldung zum Reaktionspunkt.

12. System nach Anspruch 11, wobei der Monitor (210) ein Warteschlangenmonitor ist, der den Zustand des Überlastungspunkts durch Abfragen eines Zustands einer Warteschlange von Nachrichten des Überlastungspunkts von dem Reaktionspunkt abfragt.

13. System nach Anspruch 12, wobei das aktuelle Überlastungsreaktionsprotokoll einen Wert umfasst, der einer Tiefe der Warteschlange des Überlastungspunkts im Verlauf der Zeit zugeordnet ist.

14. System nach Anspruch 11, das ferner Mittel zur Durchführung eines Verfahrens nach einem der Ansprüche 4 bis 10 umfasst.

15. Computerlesbares Medium, auf dem Daten gespeichert sind, die Sätze von Anweisungen darstellen, die, wenn sie von einem Computer ausgeführt werden, bewirken, dass der Computer ein Verfahren nach einem der Ansprüche 1 bis 10 ausführt.

## Revendications

1. Procédé permettant de gérer la congestion du trafic de réseau en utilisant une boucle de notification de congestion, CN, comportant des messages de rétroaction, le procédé comportant :
l'étape consistant à échantillonner un état d'un point de congestion, le point de congestion ayant pour objet de recevoir des messages en provenance d'un point de réaction ;
l'étape consistant à générer un historique mis à jour qui contient des réactions à la congestion en consolidant l'état du point de congestion par un historique en cours qui contient des réactions à la congestion, l'historique en cours qui contient des réactions à la congestion étant associé à un message de rétroaction en cours et reflétant la réactivité de la boucle de CN par rapport au message de rétroaction ;
l'étape consistant à générer un message de rétroaction mis à jour en fonction de l'historique mis à jour qui contient des réactions à la congestion ;
l'étape consistant à remplacer le message de rétroaction en cours par le message de rétroaction mis à jour ; et
l'étape consistant à communiquer le message de rétroaction mis à jour au point de réaction.

2. Procédé selon la revendication 1, dans lequel l'étape consistant à échantillonner l'état du point de congestion comporte l'étape consistant à échantillonner un état d'une file d'attente de points de congestion, la file d'attente de points de congestion ayant pour objet de mettre en file d'attente des messages à partir du point de réaction.

3. Procédé selon la revendication 2, dans lequel l'historique en cours qui contient des réactions à la congestion comporte une valeur associée à une profondeur de la file d'attente de points de congestion au cours du temps.

4. Procédé selon la revendication 1, dans lequel le message de rétroaction mis à jour doit être utilisé au niveau du point de réaction pour déterminer tout ajustement au niveau d'un taux d'un flux de trafic à partir du point de réaction jusqu'au point de congestion.

5. Procédé selon la revendication 1, dans lequel le message de rétroaction mis à jour comporte un indicateur de légère congestion.

6. Procédé selon la revendication 5, dans lequel le message de rétroaction mis à jour comporte un indicateur de grave congestion.

7. Procédé selon la revendication 1, dans lequel l'étape consistant à générer le message de rétroaction mis à jour comporte l'étape consistant à calculer un taux ajusté d'un flux de trafic à partir du point de réaction jusqu'au point de congestion.

8. Procédé selon la revendication 7, dans lequel le message de rétroaction comporte le taux ajusté du flux de trafic à partir du point de réaction jusqu'à la file d'attente de points de congestion.

9. Procédé selon la revendication 1, dans lequel le point de congestion est associé à un commutateur de réseau.

10. Procédé selon la revendication 1, dans lequel le point de congestion est associé à un adaptateur de réseau.

11. Système permettant de gérer la congestion du trafic de réseau en utilisant une boucle de notification de congestion, CN, comportant des messages de rétroaction, le système comportant :
un dispositif de contrôle (210) destiné à échantillonner un état d'un point de congestion, qui est arrangé pour recevoir des messages en provenance d'un point de réaction ;
un générateur d'historique (220) destiné à générer un historique mis à jour qui contient des réactions à la congestion en consolidant l'état du point de congestion par un historique en cours qui contient des réactions à la congestion, l'historique en cours qui contient des réactions à la congestion étant associé à un message de rétroaction en cours et reflétant la réactivité de la boucle de CN par rapport au message de rétroaction ;
un générateur de message (230) destiné à générer un message de rétroaction mis à jour en fonction de l'historique mis à jour qui contient des réactions à la congestion ;
un module de mise à jour de message (232) destiné à remplacer le message de rétroaction en cours par le message de rétroaction mis à jour ; et
un module de communication (240) destiné à communiquer le message de rétroaction mis à jour au point de réaction.

12. Système selon la revendication 11, dans lequel le dispositif de contrôle (210) est un dispositif de contrôle de file d'attente destiné à échantillonner l'état du point de congestion en échantillonnant un état d'une file d'attente de points de congestion de messages à partir du point de réaction.

13. Système selon la revendication 12, dans lequel l'historique en cours qui contient des réactions à la congestion comporte une valeur associée à une profondeur de la file d'attente de points de congestion au cours du temps.

14. Système selon la revendication 11, comportant par ailleurs un moyen permettant la mise en oeuvre d'un procédé selon l'une quelconque des revendications 4 à 10.

15. Support lisible par une machine ayant stocké sur celui-ci des données représentant des ensembles d'instructions qui, quand elles sont exécutées par une machine, amènent la machine à mettre en oeuvre un procédé selon l'une quelconque des revendications 1 à 10.
